# EUROPÄISCHE PATENTSCHRIFT

(11) **EP 1 106 544 B1**
(45) Veröffentlichungstag und Bekanntmachung des Hinweises auf die Patenterteilung: **01.07.2009**
(21) Anmeldenummer: 00125267.5
(22) Anmeldetag: 24.11.2000
(51) Int. Cl.: B65G 47/31

(54) **Vereinzelungssystem**
Singulating system
Système de séparation

(30) Priorität: 09.12.1999 DE 29921672 U
(43) Veröffentlichungstag der Anmeldung: 13.06.2001
(73) Patentinhaber: G.B. BOUCHERIE, N.V., 8870 Izegem (BE)
(72) Erfinder: Boucherie, Bart Gerard, 8870 Izegem (BE)
(74) Vertreter: Prinz & Partner

(56) Entgegenhaltungen:
- DE-A- 2 726 803
- FR-A- 2 391 940
- JP-A- 59 182 112
- US-A- 5 641 052
- US-A- 5 971 134

## Beschreibung

Die Erfindung betrifft ein Vereinzelungssystem für in einer Menge bereitgestellte Bürstenkörper.

In der Schrift DE 295 20 142 ist bereits eine Vereinzelungsvorrichtung beschrieben, die besonders für Zahnbürstenkörper geeignet ist und eine mehrstufige Hub-Fördereinrichtung aufweist, die einen vom Boden eines Aufnahmebehälters ansteigenden Förderweg bildet und in jeder Förderstufe ein aufwärts und abwärts bewegliches Hubelement sowie ein feststehendes Ablageelement aufweist. Die Zahnbürstenkörper werden durch die Hubelemente entlang einer senkrechten Führungswand verschoben und können dabei mit dieser in Berührung kommen. Zahnbürstenkörper, die bereichsweise Einlagerungen von Elastomermaterial oder dergleichen aufweisen, neigen dabei zum Verklemmen. Verklemmte Zahnbürstenkörper können aber zu einer Betriebsstörung führen.

Durch die Erfindung wird dieses Problem behoben.

Aus der DE-OS-27 26 803 ist eine Liefereinrichtung bekannt, die ganze Holzbunde aus einzelnen Holzstücken an eine selektive Transporteinrichtung übergibt. Die selektive Transporteinrichtung weist eine Kaskade von Förderstrecken auf, zwischen denen jeweils eine Höhendifferenz besteht. Eine Förderstrecke besteht jeweils aus zwei Förderbändern unterschiedlicher Länge, so daß auf jeder Förderstrecke der jeweilige Holzbund aufgeteilt wird.

Gemäß der Erfindung besteht das Vereinzelungssystem aus einer Kombination einer Dosiervorrichtung, die einzelne von der Menge abgesonderte Bürstenkörper übergibt und so eine Absonderung kleiner Untermengen aus der Menge durchführt mit einer selektiven Transporteinrichtung, die mehrere gemeinsam übergebene Bürstenkörper verschieden schnell weitertransportiert und so vereinzelt. Geeignete Dosiervorrichtungen sind Bunkerbänder oder Förderbänder, die langsam kontinuierlich oder taktweise bewegt werden, Kombinationen von beiden oder auch Vibratortöpfe, die als Vereinzelungseinrichtungen weit verbreitet sind. Dosiervorrichtungen können durch konstruktive Maßnahmen so gestaltet werden, daß sie ausreichend selektiv sind, um jeweils nur einen Gegenstand zu übergeben. Moderne Bürstenherstellungsmaschinen benötigen aber eine größere Anzahl von Zahnbürstenkörpern pro Zeiteinheit als von einer solchen Vereinzelungseinrichtung geliefert werden kann. Die Erfindung beruht daher auf dem Gedanken, eine wenig selektive Dosiervorrichtung zu verwenden, die pro Zeiteinheit genügend Gegenstände von der Menge absondert, jedoch regelmäßig mehrere der abgesonderten Gegenstände gemeinsam, eventuell auch fast gleichzeitig, übergibt. Die Dosiervorrichtung führt also zunächst eine Absonderung kleiner Untermengen aus der Gesamtmenge durch. Mit der anschließenden selektiven Transporteinrichtung werden dann die, möglicherweise sehr kleinen, Abstände zwischen den übergebenen Gegenständen in einem solchen Maße vergrößert, daß eine Vereinzelung der Gegenstände eintritt.

Die Selektivität der Dosiervorrichtung ist so eingestellt, daß regelmäßig mehr als nur ein abgesonderter Bürstenkörper an die selektive Transporteinrichtung übergeben wird. Da die Selektivität einer Dosiervorrichtung mit herkömmlichen Mitteln gut beherrschbar ist, kann die Durchsatzleistung des Vereinzelungssystems leicht an die Bedürfnisse der weiterverarbeitenden Maschine angepaßt werden.

Die selektive Transporteinrichtung weist eine Kaskade von Förderstrecken auf. Die angestrebte Vereinzelung der von der Dosiervorrichtung übergebenen Gegenstände kann mit einer solchen Kaskade von Förderstrecken auf verschiedene Weise erreicht werden.

Zwischen den aufeinanderfolgenden Förderstrecken besteht jeweils eine Höhendifferenz, so daß ein Gegenstand, wenn er von einer Förderstrecke auf die darauffolgende gelangt, sich zunächst absenken, dann mit der tiefergelegenen Förderstrecke in Berührung kommen und schließlich von dieser erfaßt werden wird. Ein zweiter Gegenstand, der möglicherweise neben dem betrachteten Gegenstand lag, wird niemals exakt zur selben Zeit fallen und von der tiefer gelegenen Förderstrecke mitgenommen werden. Ein zwischen den Gegenständen vorhandener Versatz, und mag er noch so klein sein, wird bei der Übergabe auf die darauffolgende Förderstrecke zumindest stark vergrößert. Derselbe Effekt wird bei der Übergabe auf die darauffolgende Förderstrecke auftreten, so daß im allgemeinen mit z.B. drei oder vier aufeinanderfolgenden Förderstrecken eine zuverlässige Vereinzelung erreicht werden kann.

Eine zusätzliche Ausgestaltung besteht darin, daß die Transportgeschwindigkeiten der aufeinanderfolgenden Förderstrecken, die vorzugsweise als Transportbänder ausgebildet sind, in Transportrichtung zunehmen, daß also jede nachfolgende Transportstrecke eine größere Transportgeschwindigkeit aufweist als die ihr vorausgehende Transportstrecke.

Eine weitere Ausführungsvariante besteht darin, daß die in Transportrichtung nachfolgenden Förderstrecken der Kaskade jeweils eine größere Reibung gegenüber den Gegenständen aufweisen als die Ihnen vorausgehenden Förderstrecken. Sobald ein Gegenstand von einer nachfolgenden Förderstrecke durch Reibung mitgenommen wird, eilt er gegenüber einem etwa neben ihm liegenden Gegenstand voraus, da dieser nicht exakt zum gleichen Zeitpunkt mitgenommen wird, und dies bewirkt die Vereinzelung.

Eine zusätzliche oder alternative Ausführung besteht darin, daß wenigstens eine der Transportstrecken, auf die wenigstens eine weitere Transportstrecke folgt, eine steuerbare Transportgeschwindigkeit aufweist und mit einem Durchgangs-Detektor für einen transportierten Gegenstand versehen ist, der bei Erfassung eines Gegenstandes eine vorübergehende Absenkung der Transportgeschwindigkeit auslöst. Durch diese vorübergehende Absenkung der Transportgeschwindigkeit wird eine Geschwindigkeitsdifferenz zu der darauffolgenden Transportstrecke bewirkt, die in der bereits beschriebenen Weise zur Vereinzelung ausgenutzt werden kann.

Weitere Vorteile und Merkmale der Erfindung ergeben sich aus der folgenden Beschreibung vorteilhafter Ausführungsformen und aus den Zeichnungen, auf die Bezug genommen wird. In den Zeichnungen zeigen:
- Figur 1 schematisch eine Perspektivansicht einer Ausführungsform des Vereinzelungssystems;
- Figur 2 eine vergrößerte schematische Perspektivansicht der in dem Vereinzelungssystem verwendeten selektiven Transporteinrichtung; und
- Figur 3 schematisch eine Perspektivansicht einer Ausführungsvariante des Vereinzelungssystems.

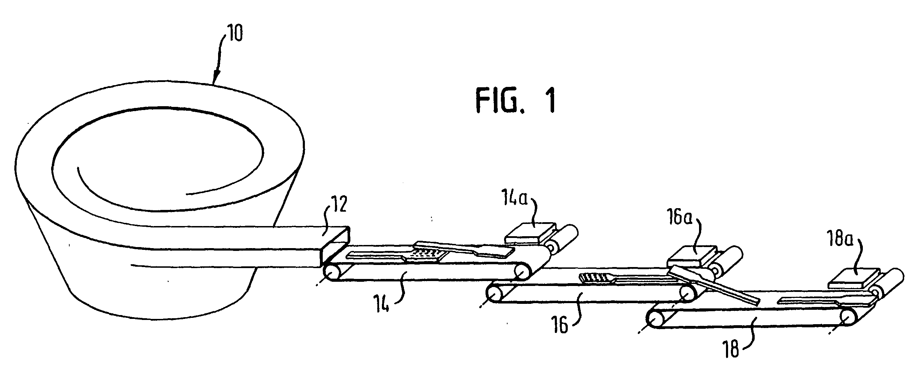

Das in Figur 1 gezeigte Vereinzelungssystem ist eine Kombination aus zwei Komponenten. Die erste Komponente ist eine Dosiervorrichtung, die bei der gezeigten Ausführungsform als Vibratortopf 10 ausgebildet ist, der die Menge von Gegenständen aufnimmt. Bei der beschriebenen Ausführungsform wird angenommen, daß die Gegenstände Zahnbürstenkörper sind. Die Zahnbürstenkörper müssen einzeln einer Weiterbearbeitungsmaschine zugeführt werden. Der Vibratortopf 10 hat einen Auslauf 12, an dem einzelne von der Menge abgesonderte Zahnbürstenkörper übergeben werden. Die zweite Komponente des Vereinzelungssystems ist eine selektive Transporteinrichtung, die aus einer Kaskade von aufeinanderfolgenden Förderstrecken besteht, nämlich drei aufeinanderfolgenden Förderbändern 14, 16, 18, zwischen denen jeweils eine Höhendifferenz h besteht. Jedes der Förderbänder 14, 16, 18 wird durch eine Antriebseinrichtung 14a, 16a, 18a mit Motor angetrieben. Die erste Förderstrecke 14 schließt unmittelbar an den Auslauf 12 des Vibratortopfes 10 an, entweder in einer Ebene oder mit einer Höhendifferenz.

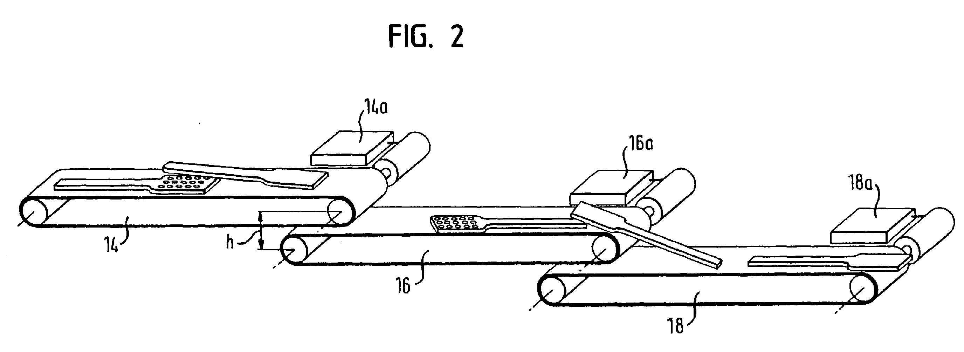

Die Selektivität des Vibratortopfes 10 ist durch bekannte konstruktive Maßnahmen so eingestellt, daß regelmäßig mehr als nur ein Zahnbürstenkörper am Auslauf 12 übergeben wird. Es kann vorkommen, daß zwei Zahnbürstenkörper nahezu gleichzeitig am Auslauf 12 übergeben werden und auf das erste Förderband 14 gelangen. Bei der in Figur 2 gezeigten Situation sind auf das Förderband 14 zwei Zahnbürstenkörper kurzzeitig nacheinander übergeben worden, wobei ein Stielbereich einen Kopfbereich überlappt. Wenn der vorauseilende Bürstenkörper über das Ende einer Förderstrecke herausragt, senkt er sich zu der darauffolgenden Förderstrecke hin, wie in Figur 2 am Übergang zwischen den Förderbändern 16 und 18 gezeigt. Dieser vorauseilende Zahnbürstenkörper wird nun von dem nachfolgenden Förderband 18 mitgenommen und so von dem nachfolgenden Zahnbürstenkörper räumlich getrennt. Dieser Vereinzelungseffekt wird noch erheblich gesteigert, wenn gemäß der bevorzugten Ausführungsform jedes nachfolgende Förderband schneller läuft als das ihm vorausgehende. Eine gleichwirkende Geschwindigkeitsdifferenz zwischen aufeinanderfolgenden Förderbändern kann aber auch dadurch erreicht werden, daß der Durchgang eines Zahnbürstenkörpers, beispielsweise mittels einer Lichtschranke, ermittelt und darauf ansprechend die Geschwindigkeit des betreffenden Förderbandes vorübergehend reduziert wird. Die verwendeten Antriebseinrichtungen mit Motor ermöglichen eine entsprechende Steuerung der Transportgeschwindigkeiten.

Alternativ oder zusätzlich werden die Förderbänder 14 mit einer Transportoberfläche versehen, deren Reibung gegenüber den Zahnbürstenkörpern unterschiedlich ist. Das Transportband 14 ist relativ glatt, während das Transportband 18, beispielsweise durch Beschichtung mit einem Elastomer, eine hohe Reibung gegenüber den Zahnbürstenkörpern aufweist.

Bei jeder der beschriebenen Ausführungen wird im Ergebnis erreicht, daß mehrere gemeinsam und eventuell sogar nahezu gleichzeitig von dem Vibratortopf übergebene Zahnbürstenkörper verschieden schnell weitertransportiert und auf diese Weise vereinzelt werden.

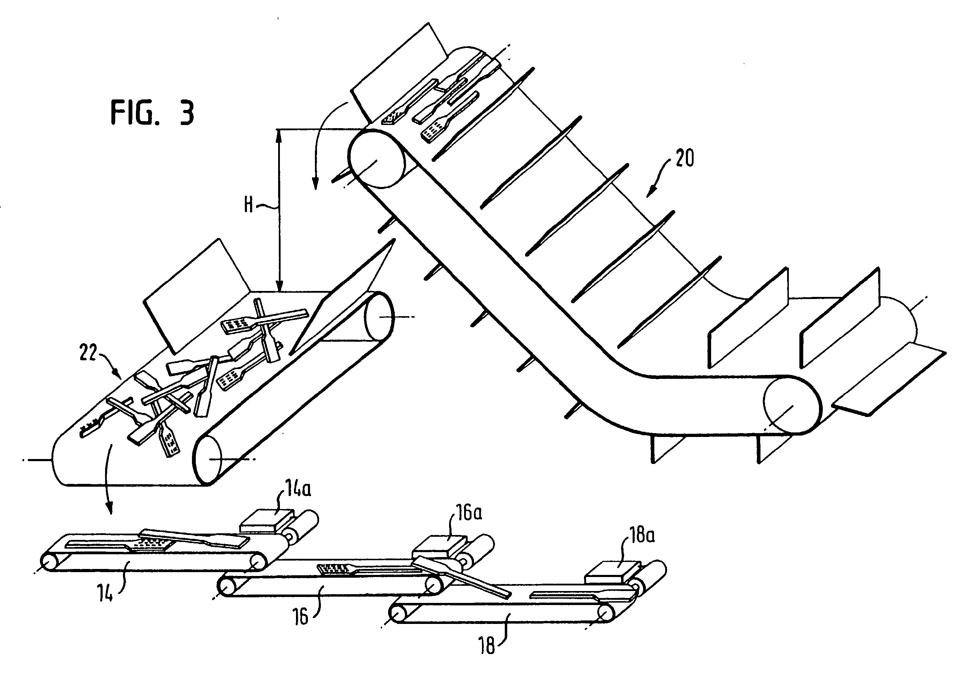

Gemäß einer weiteren Ausführungsvariante wird statt des Vibratortopfes 10 eine Dosiervorrichtung vom Typ eines kontinuierlich oder taktweise langsam bewegten Bunkerbandes oder eines Förderbandes verwendet, oder auch eine Kombination solcher Bänder. Das in Figur 3 gezeigte Vereinzelungssystem zeigt eine Dosiervorrichtung als eine Kombination eines Bunkerbandes 20 mit einem Flachförderer 22. Kleinere Mengen von Gegenständen, in diesem Fall Zahnbürstenkörper, fallen vom Bunkerband 20 auf den Flachförderer 22 über eine gewisse Höhendifferenz H. Dabei werden die, möglicherweise miteinander verstrickten, Gegenstände auseinandergeschlagen. Die Gegenstände werden dem selektiven Vereinzelungssystem taktweise oder langsam kontinuierlich zugeführt.

## Patentansprüche

1. Vereinzelungssystem für in einer Menge bereitgestellte Bürstenkörper, mit einer Kombination aus einer Dosiervorrichtung (10, 20, 22), die einzelne von der Menge abgesonderte Bürstenkörper übergibt und so eine Absonderung kleiner Untermengen aus der Menge durchführt, und einer selektiven Transporteinrichtung (14, 16, 18), die mehrere gemeinsam übergebene Bürstenkörper verschieden schnell weitertransportiert und so vereinzelt, wobei die Selektivität der Dosiervorrichtung (10, 20, 22) so eingestellt ist, daß regelmäßig mehr als nur ein abgesonderter Bürstenkörper an die selektive Transporteinrichtung (14, 16, 18) übergeben wird, und wobei die selektive Transporteinrichtung eine Kaskade von Förderstrecken (14, 16, 18) aufweist, wobei zwischen den aufeinanderfolgenden Förderstrecken (14, 16,18) jeweils eine Höhendifferenz (h) besteht.

2. Vereinzelungssystem nach Anspruch 1, **dadurch gekennzeichnet, daß** die in Transportrichtung nachfolgenden Förderstrecken (16, 18) jeweils schneller laufen als die ihnen vorausgehenden Förderstrecken (14, 16).

3. Vereinzelungssystem nach Anspruch 1 oder 2, **dadurch gekennzeichnet, daß** die in Transportrichtung nachfolgenden Förderstrecken (16, 18) jeweils eine größere Reibung gegenüber den Bürstenkörpern aufweisen als die ihnen vorausgehenden Förderstrecken (14, 16).

4. Vereinzelungssystem nach einem der Ansprüche 1 bis 3, **dadurch gekennzeichnet, daß** wenigstens eine der Förderstrecken (14, 16), auf die wenigstens eine weitere Förderstrecke (16, 18) folgt, eine steuerbare Transportgeschwindigkeit aufweist und mit einem Durchgangs-Detektor für einen transportierten Bürstenkörper versehen ist, der bei Erfassung eines Bürstenkörpers eine vorübergehende Absenkung der Transportgeschwindigkeit auslöst.

5. Vereinzelungssystem nach einem der Ansprüche 1 bis 4, **dadurch gekennzeichnet, daß** die Förderstrecken (14, 16, 18) jeweils ein Transportband aufweisen.

6. Vereinzelungssystem nach einem der vorstehenden Ansprüche, **dadurch gekennzeichnet, daß** die Dosiervorrichtung als Vibratortopf (10) ausgebildet ist, der die Menge von Bürstenkörpern aufnimmt.

7. Vereinzelungssystem nach einem der Ansprüche 1 bis 5, **dadurch gekennzeichnet, daß** die Dosiervorrichtung als kontinuierlich oder taktweise langsam bewegtes Förderband (22) oder Bunkerband (20) oder als Kombination (20, 22) beider ausgebildet ist.

## Claims

1. An individualizing system for brush bodies provided in bulk, comprising a combination of a metering device (10, 20, 22) that delivers individual brush bodies that have been separated from the group and in this way carries out a separation of small subsets from the group, and of a selective transport means (14, 16, 18) that conveys several jointly delivered brush bodies at different speeds, thus separating them, the selectivity of the metering device (10, 20, 22) being adjusted in such a way that regularly more than just one separated brush body is delivered to the selective transport means (14, 16, 18), and the selective transport means having a cascade of conveying segments (14, 16, 18), there existing a height difference (h) between the respective consecutive conveying segments (14, 16, 18).

2. The individualizing system according to claim 1, **characterized in that** the conveying segments (16, 18) that follow in the transport direction each run faster than the conveying segments (14, 16) preceding them.

3. The individualizing system according to claim 1 or 2, **characterized in that** the conveying segments (16, 18) that follow in the transport direction each have a greater friction with respect to the brush bodies than the conveying segments (14, 16) preceding them.

4. The individualizing system according to any of claims 1 to 3, **characterized in that** at least one of the conveying segments (14, 16) that is followed by at least one further conveying segment (16, 18) has a controllable transport speed and is provided with a passage detector for a transported brush body that causes the transport speed to be temporarily lowered when a brush body is detected.

5. The individualizing system according to any of claims 1 to 4, **characterized in that** the conveying segments (14, 16, 18) each include a transport belt.

6. The individualizing system according to any of the preceding claims, **characterized in that** the metering device is configured as a vibration bucket (10) that holds the group of brush bodies.

7. The individualizing system according to any of claims 1 to 5, **characterized in that** the metering device is configured as a continuously or intermittently slowly moving conveyor belt (22) or bunker belt (20), or as a combination (20, 22) of both.

## Revendications

1. Système d'individualisation pour des corps de brosses fournis en quantité, comportant une combinaison constituée par un dispositif de dosage (10, 20, 22) qui délivre des corps de brosses individuels séparés de la quantité et réalise ainsi une séparation de petites sous-quantités provenant de la quantité, et par un dispositif de transport (14, 16, 18) sélectif qui transporte à différentes vitesses et sépare ainsi plusieurs corps de brosses délivrés en commun, la sélectivité du dispositif de dosage (10, 20, 22) étant ajustée de telle sorte que régulièrement, plus d'un seul corps de brosse séparé soit délivré au dispositif de transport (14, 16, 18) sélectif, et le dispositif de transport sélectif présentant une cascade de voies de convoyage (14, 16, 18), une différence de hauteur (h) se trouvant respectivement entre les voies de convoyage (14, 16, 18) successives.

2. Système d'individualisation selon la revendication 1, **caractérisé en ce que** les voies de convoyage (16, 18) se succédant en direction de transport avancent chacune plus rapidement que les voies de convoyage (14, 16) qui les précèdent.

3. Système d'individualisation selon la revendication 1 ou 2, **caractérisé en ce que** les voies de convoyage (16, 18) se succédant en direction de transport présentent une friction plus importante par rapport aux corps de brosses que les voies de convoyage (14, 16) qui les précèdent.

4. Système d'individualisation selon l'une des revendications 1 à 3, **caractérisé en ce qu'**au moins une des voies de convoyage (14, 16) qui est succédée par au moins une autre voie de convoyage (16, 18), présente une vitesse de transport pilotable et est pourvue d'un détecteur de passage pour un corps de brosse transporté qui, lors de la séparation d'un corps de brosse, déclenche une baisse temporaire de la vitesse de transport.

5. Système d'individualisation selon l'une des revendications 1 à 4, **caractérisé en ce que** les voies de convoyage (14, 16, 18) présentent chacune une bande transporteuse.

6. Système d'individualisation selon l'une des revendications précédentes, **caractérisé en ce que** le dispositif de dosage est réalisé sous forme de pot vibrant (10) qui reçoit la quantité de corps de brosses.

7. Système d'individualisation selon l'une des revendications 1 à 5, **caractérisé en ce que** le dispositif de dosage est réalisé sous forme de bande de convoyage (22) ou de bande à trémie (20) se déplaçant en continu ou à cadence lente ou en tant que combinaison (20, 22) des deux bandes.
